# EUROPEAN PATENT SPECIFICATION

(11) **EP 3 173 183 B1**
(45) Date of publication and mention of the grant of the patent: **24.02.2021**
(21) Application number: 16200183.8
(22) Date of filing: 23.11.2016
(51) Int. Cl.: B23K 37/02, B23K 9/04, B33Y 30/00, B23K 9/16

(54) **AUTONOMOUS AND UNIVERSAL FITTING FOR 3D PRINTING**
AUTONOMES UND UNIVERSELLES ANSCHLUSSSTÜCK FÜR 3D-DRUCKEN
RACCORD UNIVERSEL ET AUTONOME POUR IMPRESSION 3D

(30) Priority: 25.11.2015 IT UB20155874
(43) Date of publication of application: 31.05.2017
(73) Proprietor: Progemec S.r.l., 03043 Cassino (FR) (IT)
(72) Inventor: BURDI, Andrea, 03043 Cassino (FR) (IT); MENTELLA, Alessia, 03043 Cassino (FR) (IT)
(74) Representative: Cardelli, Guido

(56) References cited:
- JP-A- 2002 210 561
- US-A1- 2011 120 981
- US-A1- 2013 119 039

## Description

The present invention relates to an autonomous and universal fitting for 3D printing by means of an arc welder with metal under gas protection, as disclosed in the preamble of claim 1 (see, for example, WO 2013/068830 A1).

Chinese patent application n. CN 103691946 A discloses a 3D metal printer comprising an arc welder with inert gas, a printing head, a motion mechanism along x, y and z axes, to which the printing head is connected for its spatial positioning, a metallic wire feeder that softens and melts into droplets. The droplets will cool down and solidify on a platform on which a product is obtained by additive manufacturing. Mentioned in the abovementioned description of the patent application are drawings that are not attached to the application. This 3D metal printer has an advantage that a laser device is not used to obtain the product, therefore its production cost is low. Furthermore, the raw materials are common metallic materials, and a particularly thin metallic powder is not required. Lastly the costs for treatment and production are greatly reduced.

Chinese Utility Model CN 203817588 U describes a metal 3D printer based on electric arc welding. The metal 3D printer comprises a base and a support arranged on the base. The base is provided with a worktable movable along the x and y axes. A welder device is positioned on the support movable along the z axis. The welding device and the worktable operate separated the one from the other. In the abovementioned utility model, the printing head is made by the arc welding machine or, rather, an electric arc generator is integrated in the printing head; this makes the printing head heavier and then more subject to inertia during its vertical movement, with a result that an inaccurate deposition process originates.

It should be understood that both the abovementioned documents embody the technology of arc welding fusion of a metallic wire in an inert gas atmosphere in a 3D printer in designing a particular welding machine, whose printing head can move along a z axis perpendicular to platform in the x-y plane that is movable on turn along the respective axes.

Patent Application U.S. 2013/0119039 A1 describes a welding cell unit including a frame that forms upper compartment, where a robotic welding system is situated, and a lower compartment housing a robot controller and a welding power supply.

One of the objects of the present invention is to improve what described in the abovementioned documents.

In particular, with reference to the first mentioned document, an object is to obtain a 3D printer putting together an arc welding machine with a universal fitting, that can use also an active gas or, in case of flux cored wire welding, can work without protection gas.

With reference to the second mentioned document, an object is to make a printing head exclusively consisting of a torch, with the arc generator being maintained always outside the printing area and not subject to movement, so that the printing head is made more manageable, controllable and accurate, because the only mass to move is that one of the torch. The resulting process is, consequently, a more stable, controlled and accurate deposition process. In general, the present invention aims to transform any arc welding machine with metal under gas protection available on the market, which is normally present in the equipment of a small workshop, into a 3D printer, with a result of extending in this way the normal field of use of a welding machine from the permanent mechanical junction of two or more parts to the field of the additive manufacturing.

A further object of the invention is to give a housing that can contain an arc welding machine with metal under gas protection but that can also permit the arrangement externally to the housing, based on the necessities.

Another object of the present invention is to rationalize the arrangement of the electrical panel in the 3D printer.

Yet another object of the invention is to provide a functional 3D printer housing that is easily accessible from the outside.

Yet another object of the invention is to provide a universal fitting that is autonomous also by the point of view of the electronics so that the fitting can be interfaced with any arc welding machine.

A further object of the invention is not to require any device for the advancement and control of the metallic wire, neither a coiler, both being adjusted by specific mechanisms integrated in the commercial arc-welding machine.

The universality of the fitting according to the invention is clear from above. The technical task as stated and the specified objects are substantially achieved by an autonomous and universal fitting for 3D printing by means of an arc welder with metal under gas protection, as defined in claim 1, comprising technical features stated in one or more accompanying claims.

Further features and advantages of the present invention will more clearly appear in the following description, with the help of the attached drawings in which:
- figure 1 is a front view of the fitting according to the invention in a closed position;
- figure 2 is an axonometric view of the fitting of figure 1 with open doors, an arc welding machine with metal under gas protection being shown with dashed lines inside a lower compartment of the fitting;
- figure 3 is a front view of the fitting in figure 1 with doors open, the arc welding machine with metal under gas protection and its torch being shown with dashed lines inside the fitting;
- figure 4 is a side view of the fitting in figure 1 that is partially cross-sectioned in order to show an upper compartment; and
- figures 5 and 6 are respectively a front view and a side view of the fitting in figure 1 with doors open and welding machine that is positioned outside.

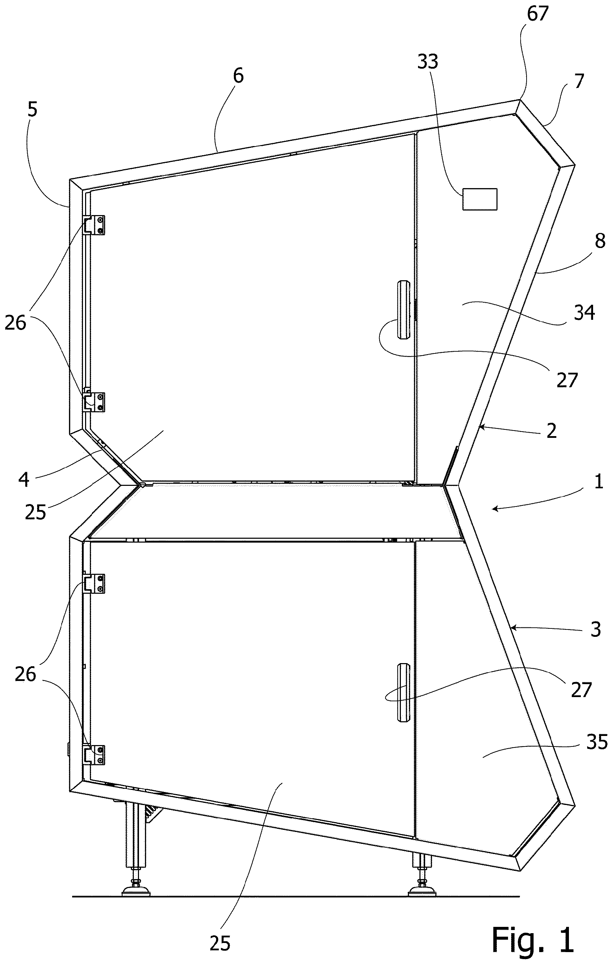

Referring initially to figures 1 to 3 which are a front view with closed doors, an axonometric view and a front view with open doors of the fitting according to the invention. The fitting includes a vertically extending housing 1, made of a suitable material and aesthetically conformed in the shape of a number three upside down. The fitting has an upper compartment 2 and a lower compartment 3. The upper compartment 2 has external side walls 4, 5, 6, 7, and 8, according to an irregular pentagonal profile on an upper base 9 having a quadrilateral plant and parallel sides. With reference to figure 1, indicated in clockwise direction are a wall 4 tapered downward, a vertical wall 5, a first covering pitch 6, a second covering pitch 7 and an inclined wall 8 tapered towards the upper base 9. Situated on the upper base 9 is a support platform 11 movable according to x and y axes of a Cartesian plane (not shown in figures), along orthogonal guides indicated generically as 12. The support platform 11 supports a printing plane that is fixed removably thereto in such a way that the printing plane is replaced after each printing process.

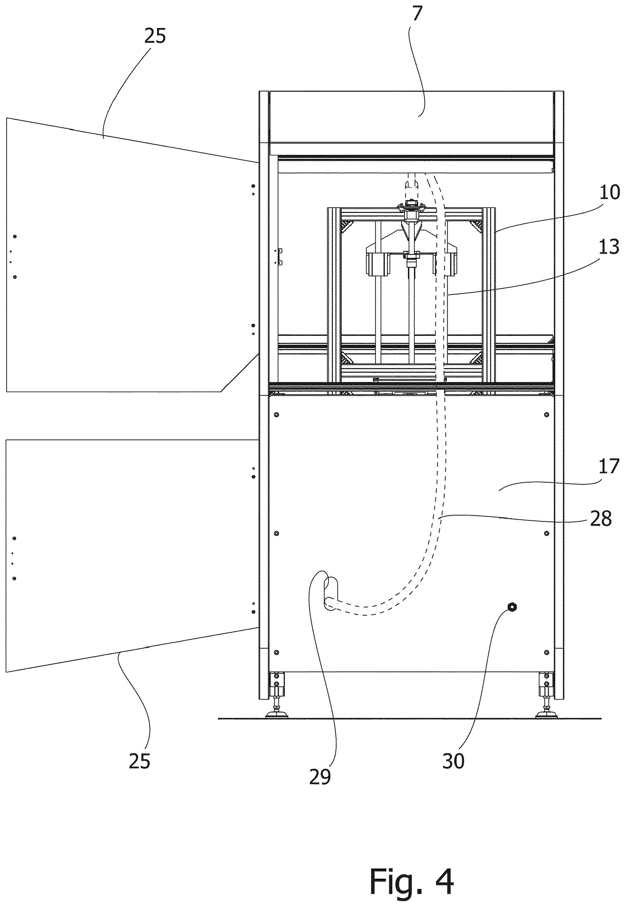

As shown in figure 4, which is a partially cross-sectioned side view of the fitting in figure 1, the upper compartment 2 contains a support frame 10, fixed in which are vertical guides 13 for a welding torch 14 that represents the print head. The welding torch 14, such as the arc welding machine with metal under gas protection as described after, is represented with dashed lines in order to mean that it could be chosen among all those commercially available. The welding torch 14 is mounted by a support element 15 that is movable along the vertical guides 13 according to a z axis perpendicular to the x-y Cartesian plane. The support element 15 is configured in order that it can support the torch although it maintains its original grip. The only change to be carried out on the welding torch 14 is to eliminate the switch normally present thereon, as commercially available, that serves to control the welding process. This is done to allow the integration of the welding torch 14 in the control electronics of the machine.

The first and second covering pitches 6, 7 are inclined downward from opposite sides with respect to a top 67 of the coverage. The upper compartment 2 of the housing 1 is closed in front and rear by a door 25 pivoted by hinges 26 to the vertical wall 5, and by a top closure wall 34 in which a small display indicating the state of operation is indicated as 33. The door 25 has a handle 27 opposite to the hinges 26. The handle 27 allows a comfortable opening of the door 25 and an access from outside to the upper compartment 2.

The lower compartment 3 is prismatic with a lower base 16 of dimensions corresponding to those of the upper base 9. An external vertical wall 17 closes laterally the lower compartment 3 and allows the inclusion of a sliding drawer 18 that collects residue and slag. Aesthetically protruding from the external vertical wall 17 are projections 19, 20, with a lower closure wall 35 similar to the configuration of the top closure wall 34. Opposite to the vertical external wall 17 is an inner counter wall 21 and a vertical external wall 22.

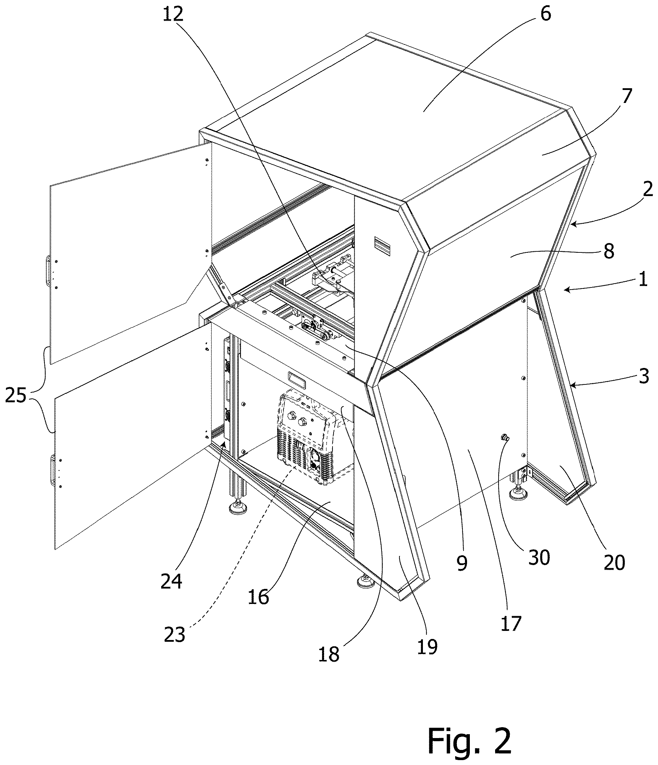

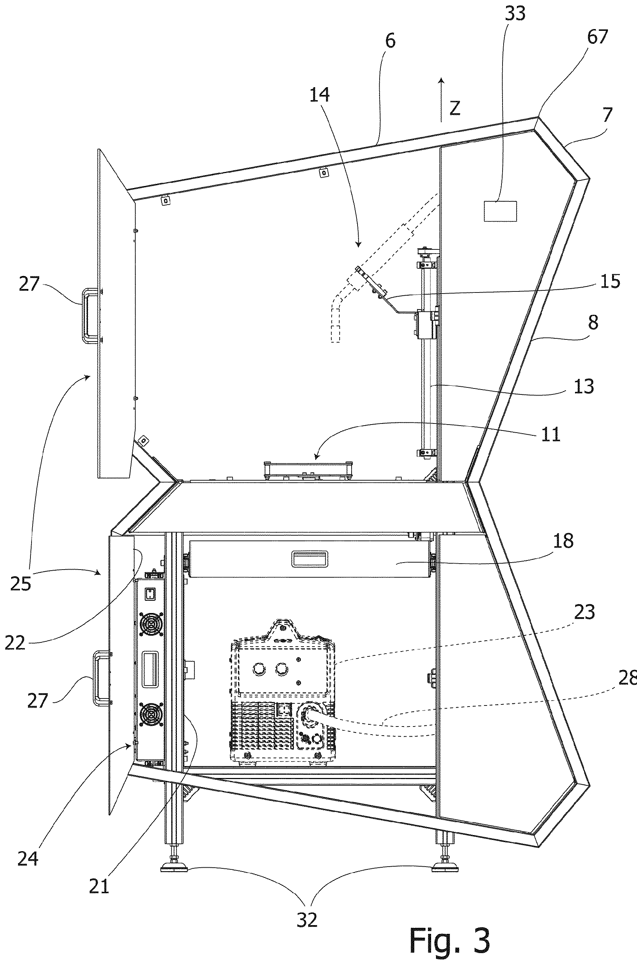

The lower compartment 3 is to house an arc welding machine with metal under gas protection 23 that is simply called hereinafter as arc welder 23, and an electric panel 24 is provided between the inner counter wall 21 and the vertical external wall 22. The arc welder 23 is represented with dashed lines, because, as mentioned previously, it can be of any among those available on the market. The vertical extending housing 1, such as evident in figures 2 and 3, rests on feet 32.

Like the upper compartment 2, also the lower compartment 3 of the housing 1 is closed by a door 25, that is pivoted by hinges 26 to the vertical external 22 of the lower compartment 3 and equipped with a handle 27.

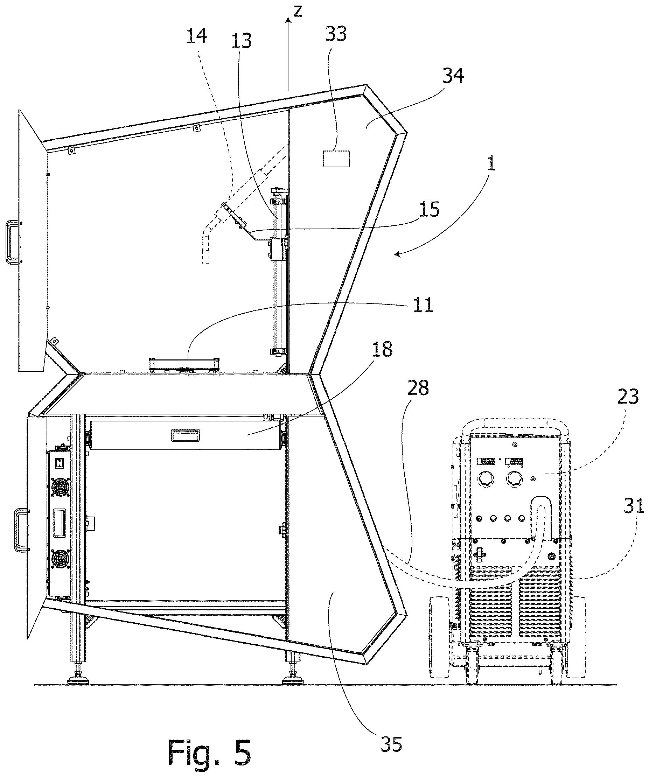

Briefly, as evident in figures 2 and 3, the support platform 11, being mounted on the orthogonal guides 12, uses the Cartesian movement according to x and y axes (not shown in figures), while the welding torch 14, in its function of printing head, being mounted by the support element 15 on the vertical guides 13, can move orthogonally to the platform support, according to the axis Z shown in figure 5.

Movements of the support platform 11 according to x and y axes and of the welding torch 14 according to the z axis are obtained with arrangements adopting stepper motors, each of which moves a ball screw through a timing belt. The guides on each axis are insured by sleeves ball rushing on trees hardened. These provisions are not represented or described further as they are conventional.

The electric panel 24 checks control means not shown for the operation of arc welder 23 and for the movement of the support platform 11 and welding torch 14.

The electric panel 24, being placed in the space between the inner counter wall 21 and the vertical external wall 22, includes, although not shown in detail, a feeder, a control board, drives for stepper motors and a card relay, which is connected to the control board and commands the welding torch 14. All the derivations inside the electric panel 24 are made with a terminal board. The electric panel 24 also provides a main switch operated from the outside and fans that guarantee the cooling of the various components. The panel is connected also to a power source for the arc welder 23.

The control board could be a PiBot controller board rev.2, available on the market. Connected to the control card are the drives for the stepper motors (PiBot PB6600) and a relay card to which cables that originally were connected to the switch in the welding torch 14 are connected. For a 3D printing work, the welding torch 14 is switched on and off by the relay by using a pulse from the control board. As usual, the control board has a firmware that might be the one normally used in 3D printers, but adjusted to the mechanics of the fitting according to the present invention. In order to control the printing work of the arc welder the display 33 mentioned above can be used. Alternatively, an operator can connect to the control board with a computer through a USB port and view all parameters and progress of the process by using a software (PiBot Host) provided by the manufacturer of the control board. An input file for printing is achieved by the same software that is used by traditional 3D printers and can sent to the machine both by using the software PiBot Host above mentioned, or through a micro SD memory.

In the fitting in figures 1 to 4, the arc welder 23 can be placed inside the lower compartment 3.

When the arc welder 23 is positioned within the vertically extending housing 1, in the lower compartment 3, as shown in figure 4, its torch cable 28 extends from the lower compartment 3 to the upper compartment 2 where the welding torch 14 is housed. The torch cable 28 passes from the lower compartment 3 of the housing 1 to the outside through a slot 29 situated in the vertical external wall 17; a plug 30 for gas protection is arranged on the same vertical external wall 17.

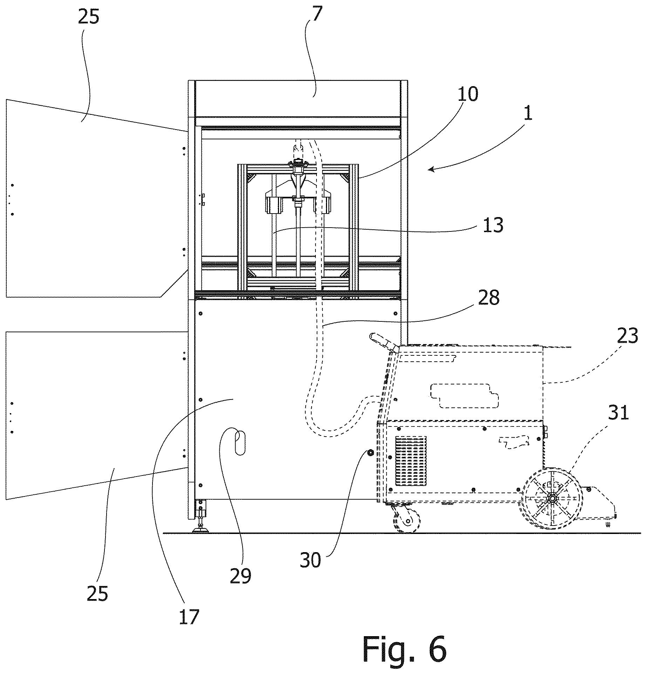

Reference is made now to figures 5 and 6 which are respectively a front view and a side view of the 3D printer with open doors and the arc welder 23 situated outside the lower compartment 3. The arc welder 23 is mounted on a cart 31 and is still a conventional arc welding machine with metal under gas protection.

The cart 31 is positioned laterally to the housing 1 on the side in which the welding torch 14 is provided so that the connection between the arc welding machine 23 and the welding torch 14, through the torch cable 28, is the most direct as possible.

It should be understood that thanks to the autonomous and universal fitting for 3D printing by the arc welding machine with metal under gas protection above described, any arc welding machine with metal under gas protection among those commercially available can be used, in order to get a 3D printer that is cheap and extremely efficient.

## Claims

1. An autonomous and universal fitting suitable for 3D printing by means of an arc welder with metal under gas protection, containing a support platform (11) movable along x and y axes, a welding torch (14) movable perpendicularly to the support platform (11) along a z axis orthogonal to the plane defined by the x and y axes and an arc welding machine (23) with metal under gas protection, the autonomous and universal fitting comprising a vertically extending housing (1) having:
- an upper compartment (2), and
- a lower compartment (3) for housing the arc welding machine (23) with metal under gas protection,
**characterized in that**
- the support platform (11) is mounted on orthogonal guides (12) and the welding torch (14) is mounted on vertical guides (13) fixed to a supporting frame (10),
- the upper compartment (2) is open at the bottom, and
- a drawer (18) for collecting residue and slag is slidably mounted in the lower compartment (3) between an external vertical wall (17) and an internal counter wall (21).

2. The fitting according to claim 1, wherein the lower compartment (3) of the housing (1) is prismatic with a lower base (16), the external vertical wall (17), another external vertical wall (22) positioned opposite to the external vertical wall (17), projections (19, 20) configured as in the upper compartment (2) protruding from the external vertical wall (17).

3. The fitting according to claim 2, wherein the internal counter wall (21) opposite to the external vertical wall (17) form a cavity in the lower compartment (3) with the other vertical external wall (22).

4. The fitting according to claim 3, wherein the lower compartment (3) receives a vertically positioned electric panel (24).

5. The fitting according to claim 1, wherein the support platform (11) supports a printing plane that is fixed removably thereto in such a way that the printing plane is replaced after each printing process.

## Patentansprüche

1. Autonomes und universelles Zubehör, das für 3D-Drucken mittels eines Bogenschweißgeräts mit Metall unter Gasschutz geeignet ist, enthaltend eine Halterungsplattform (11), die entlang X- und Y-Achsen bewegbar ist, einen Schweißbrenner (14), der senkrecht zur Halterungsplattform (11) entlang einer Z-Achse bewegbar ist, im rechten Winkel zur Ebene, definiert durch die X- und Y-Achsen, und eine Bogenschweißmaschine (23) mit Metall unter Gasschutz, wobei das autonome und universelle Zubehör ein sich vertikal erstreckendes Gehäuse (1) umfasst, aufweisend:
- eine obere Unterteilung (2) und
- eine untere Unterteilung (3) zur Unterbringung der Bogenschweißmaschine (23) mit Metall unter Gasschutz,
**dadurch gekennzeichnet, dass**
- die Halterungsplattform (11) auf rechtwinkeligen Führungen (12) montiert ist und der Schweißbrenner (14) auf vertikalen Führungen (13) montiert ist, fixiert an einem Halterungsrahmen (10);
- die obere Unterteilung (2) an der Unterseite offen ist und
- ein Schubkasten (18) zum Sammeln von Resten und Schlacke verschiebbar in der unteren Unterteilung (3) zwischen einer externen vertikalen Wand (17) und einer internen Gegenwand (21) montiert ist.

2. Zubehör nach Anspruch 1, wobei die untere Unterteilung (3) des Gehäuses (1) prismatisch ist, mit einer unteren Basis (16), der externen vertikalen Wand (17), einer anderen externen vertikalen Wand (22), positioniert gegenständig zur externen vertikalen Wand (17), wobei Vorsprünge (19, 20) konfiguriert sind wie in der oberen Unterteilung (2), die von der externen vertikalen Wand (17) hervorstehen.

3. Zubehör nach Anspruch 2, wobei die interne Gegenwand (21), die gegenständig zur externen vertikalen Wand (17) angeordnet ist, einen Hohlraum in der unteren Unterteilung (3) mit der anderen vertikalen externen Wand (22) formt.

4. Zubehör nach Anspruch 3, wobei die untere Unterteilung (3) eine vertikal positionierte elektrische Schalttafel (24) aufnimmt.

5. Zubehör nach Anspruch 1, wobei die Halterungsplattform (11) eine Druckebene trägt, die entfernbar daran fixiert ist, sodass die Druckebene nach jedem Druckvorgang ersetzt wird.

## Revendications

1. Accessoire universel et autonome pour impression 3D au moyen d'une soudeuse à l'arc avec du métal sous protection gazeuse, contenant une plate-forme de support (11) mobile le long des axes x et y, un chalumeau (14) mobile perpendiculairement à la plate-forme de support (11) le long d'un axe z orthogonal au plan défini par les axes x et y et une machine de soudage à l'arc (23) avec du métal sous protection gazeuse, l'accessoire autonome et universel comprenant un boîtier (1) s'étendant verticalement ayant :
- un compartiment supérieur (2), et
- un compartiment inférieur (3) pour contenir la machine à souder à l'arc (23) avec du métal sous protection gazeuse,
**caractérisé en ce que**
- la plate-forme de support (11) est montée sur des guides orthogonaux (12) et le chalumeau (14) est monté sur des guides verticaux (13) fixés à un cadre de support (10),
- le compartiment supérieur (2) est ouvert dans la partie inférieure, et
- un tiroir (18) pour la collecte des résidus et des scories est monté coulissant dans le compartiment inférieur (3) entre une paroi verticale externe (17) et une contre-paroi interne (21).

2. Accessoire selon la revendication 1, dans lequel le compartiment inférieur (3) du logement (1) est prismatique avec une base inférieure (16), la paroi verticale externe (17), une autre paroi verticale externe (22) positionnée à l'opposé de la paroi verticale externe (17), des saillies (19, 20) configurées comme dans le compartiment supérieur (2) dépassant de la paroi verticale externe (17).

3. Accessoire selon la revendication 2, dans lequel la contre-paroi interne (21) opposée à la paroi verticale externe (17) forme une cavité dans le compartiment inférieur (3) avec l'autre paroi verticale externe (22).

4. Accessoire selon la revendication 3, dans lequel le compartiment inférieur (3) reçoit un panneau électrique (24) positionné verticalement.

5. Accessoire selon la revendication 1, dans lequel la plate-forme de support (11) soutient un plan d'impression qui y est fixé de manière amovible de telle sorte que le plan d'impression est remplacé après chaque processus d'impression.
